# EUROPEAN PATENT SPECIFICATION

(11) **EP 1 812 353 B1**
(45) Date of publication and mention of the grant of the patent: **12.09.2012**
(21) Application number: 05802593.3
(22) Date of filing: 11.11.2005
(51) Int. Cl.: C02F 11/08, B01J 3/00

(54) **METHOD FOR SUPERCRITICAL WATER OXIDATION**
VERFAHREN ZUR OXIDATION IN ÜBERKRITISCHEM WASSER
PROCEDE D'OXYDATION DE FLUIDE SUPERCRITIQUE

(30) Priority: 15.11.2004 SE 0402783
(43) Date of publication of application: 01.08.2007
(73) Proprietor: Hollingford Limited, Cork (IE)
(72) Inventor: STENMARK, Lars, S-SE-691 41 KARLSKOGA (SE); GIDNER, Anders, DE-50935 KÖLN (DE); CARLSSON, Kim, S-SE-691 53 KARLSKOGA (SE); WASS, Gert, S-SE-690 21 GRANBERGSDAL (SE)
(74) Representative: Weldon, Michael James
(86) International application number: PCT/SE2005/001704
(87) International publication number: WO 2006/052206

(56) References cited:
- EP-A1- 0 888 153
- DE-A1- 10 259 928
- DE-A1- 19 747 696
- DE-A1- 19 955 150
- US-A- 4 384 897
- US-A1- 2002 070 179
- PATENT ABSTRACTS OF JAPAN vol. 2000, no. 22 09 March 2001 & JP 2001 121167 A (JAPAN ORGANO CO LTD) 08 May 2001

## Description

### FIELD OF INVENTION

This invention relates to a method for supercritical water oxidation.

### BACKGROUND OF THE INVENTION

Supercritical water oxidation is a method for efficiently destructing organic pollutants in wastewater and sludge. The method is known to rapidly and efficiently transform the organic material comprising substantially carbon and hydrogen to carbon dioxide and water, often with an efficiency of above 99%.

The most efficient and inexpensive reactor layout is the tubular reactor. For wastewater streams containing solid organic material, the tubular reactor is the most practical solution since a given velocity is needed to transport the solid material through the reactor. Alternatively, a vertical bulk reactor is used, wherein the solid material is transported through the reactor by means of gravity. However, a drawback of using such a vertical reactor is that the solid material, which is heavier than supercritical water, is transported faster through the reactor with lower destruction efficiency as a result.

In US 6,551,517 B1 a process for the conducting of chemical reactions in a fluid under pressure and at temperature in a supercritical fluid containing a solvent and at least one electrolyte such as a salt, in which reactive species are generated in situ by electrolysis, is disclosed. According to the invention, the fluid flows upwards in a reservoir reactor crossing through a first lower electrolysis zone with high salt solubility and a second upper zone in which the salts precipitate, then the fluid free of salt is evacuated at the upper part of the reservoir reactor and directed into a second tubular reactor to reach the desired stage of advancement of the conversion.

### SUMMARY OF THE INVENTION

A drawback of the reactor system disclosed in B1 is that the oxidant is not fed to the reactor, but it is generated in situ by electrolysis. Hydrogen is also formed by the process, which has to be separated from the oxygen to avoid that the hydrogen and the oxygen immediately react with each other. It is believed to be expensive to produce oxidant in such a manner.

A further drawback is that due to the stream being directed from the bottom of the tank to the top thereof any solid material will sink to the bottom of the tank, and will thus not be transported together with the flow through the tank and through the second tubular reactor. If the solid material contains organic material, the destruction efficiency will thus be very low.

For some wastewater streams, a tubular reactor having short distances to the reactor walls may have its limitations. While treating wastepaper sludge to recover paper filler for the manufacturing of paper, some gypsum may form in the reactor immediately after the intake of the oxidant (due to formation of sulfuric acid that reacts with calcium carbonate in the filler). The gypsum may stick on the reactor walls and cause rather rapid local clogging of the reactor. Similar problems occur when treating municipal sludge if too high amounts of calcium and sulfur are present in the wastewater.

Another general problem with supercritical water oxidation comprises difficulties in treating wastewater streams containing dissolved salts. At conditions supercritical to water the salts become insoluble and the salts may be precipitated onto surfaces of a heat exchanger located upstream of the reactor causing the efficiency of the heat exchanger to drop. A solution to this problem is to mix a stream containing dissolved salts at conditions subcritical to water with a stream free from salts at conditions supercritical to water in the tubular reactor so that the mixed stream is at conditions supercritical to water. In this manner, a phase transition in a heat exchanger may be avoided and instead the precipitation of the salts occurs in the tubular reactor where the two streams are mixed. However, in some applications clogging of the tubular reactor occurs at this location due to that some salts are "sticky" when they are transformed from dissolved to solid state, and that the distances to the walls of the tubular reactor are short.

Another limitation when using tubular reactors for supercritical water oxidation is that for instance halogens are very corrosive at high but still subcritical temperatures for water and particularly at low pH values, in spite of the fact that corrosion resistant nickel-based alloys are used as construction material. If the halogen is comprised in an organic compound, no corrosion occurs until the organic compound is decomposed to carbon dioxide, water and halogen ion(s). To reduce the corrosion a pH neutralizing substance may be injected into an end portion of the reactor before the stream reaches subcritical temperatures for water. A common substance for pH adjustment is sodium hydroxide. However, a difficulty when feeding sodium hydroxide or similar alkaline is that these are hardly miscible with supercritical water. A melt is formed at supercritical temperatures for water, which is strongly corrosive to the material of construction.

The present invention provides a method that overcomes, or at least reduces, the problems and limitations of the prior art reactors and methods as described above.

The invention in its various aspects is set out in claims 1 - 11.

In a preferred embodiment the method provides for the formation of solid and/or corrosive material within the vertical reactor section, preferably far from any reaction section walls, on which the solid may settle, and/or which walls may experience corrosion problems. Simultaneously, the method should prevent any formation of clogging and/or corrosive material in the non-vertical reactor section.

If the flow contains solid material, it may be transported through the vertical and non-vertical reactor sections in the same direction as the flow, and if the vertical reactor section is configured for precipitation of solid material from the flow, it may be transported through the vertical reactor section in the same direction as the flow, and if the non-vertical reactor section is located downstream of the vertical reactor section, the precipitated solid material may be transported also through the non-vertical reactor section in the same direction as the flow.

The method of the present invention severely reduces problems of clogging and corrosion.

The present invention provides a method for supercritical water oxidation, wherein problems with clogging and corrosion may be reduced, while very high destruction efficiency is maintained.

Other features and advantages of the invention will become more readily understood from the following detailed description taken in connection with the appended claims and attached drawings.

### BRIEF DESCRIPTION OF THE DRAWINGS

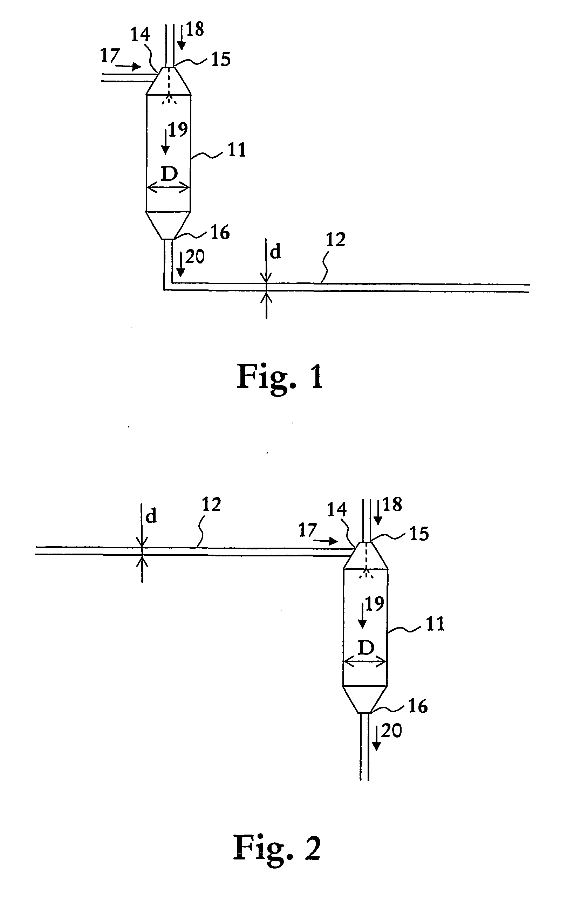

Figs. 1-3 illustrate each, in a cross-sectional side view, a reactor used for a method of supercritical water oxidation according to a respective embodiment of the present invention.

### DETAILED DESCRIPTION OF EMBODIMENTS

A reactor for use in supercritical water oxidation according to a first illustrated embodiment of the present invention is shown in Fig. 1. The reactor comprises an essentially vertical reactor section 11, and an essentially non-vertical reactor section 12. The non-vertical reactor section 12 is preferably substantially horizontally arranged.

The vertical reactor section 11, which may be referred to as a bulk or reservoir reactor, is preferably substantially cylindrical having a diameter D, and the non-vertical reactor section 12, which may be referred to as a tubular reactor, is preferably substantially cylindrical having a diameter d, which is substantially smaller than the diameter D of the bulk reactor 11. In other words, the vertical bulk reactor section 11 has a cross-sectional area which is substantially larger than the cross-sectional area of the non-vertical tubular reactor section 12. The cross-sectional area of the bulk reactor section 11 may be at least two times, preferably at least three times, more preferably at least five times, and most preferably between about five and ten times, larger than the cross-sectional area of the tubular reactor section 12.

The bulk reactor section 11 has a first 14 and a second 15 inlet in an upper portion of the bulk reactor section 11, and an outlet 16 in a lower portion of the bulk reactor section 11.

The first inlet 14 is connected to receive a flow containing organic material and water such as wastewater or sludge as being schematically indicated by arrow 17. The bulk reactor section 11 is configured to oxidize part of the organic material in the flow through supercritical water oxidation while the flow is flowed through the bulk reactor section from top to bottom as being schematically indicated by arrow 19. The outlet 16 is provided for outputting the reacted flow at the bottom of the bulk reactor section 11 as being schematically indicated by arrow 20.

If the flow contains solid material, or if the bulk reactor section is configured for precipitation of solid material from the flow, this solid material is output at the outlet 16 of the bulk reactor section 11 together with the flow.

The tubular reactor section 12 is connected to the outlet 16 of the bulk reactor section 11 and is configured to very efficiently oxidize organic material, which was not oxidized by the bulk reactor section 11 through supercritical water oxidation.

The reactor may further comprise various sensors, such as flow and temperature sensors, as is generally known in the art. A computer is typically provided for the overall control of the reactor, and various control and regulation equipment is used for the control of the different streams. Pumps, valves, heaters and coolers are typically used for adjusting pressure and temperature.

By means of the reactor of the embodiment illustrated in Fig. 1, a very efficient destruction of a large variety of wastewater and sludge can be obtained without any risk of clogging the reactor.

In a first exemplary version of the illustrated embodiment the flow also contains calcium and sulfur. Oxidant, particularly oxygen, is introduced through the inlet 15 as being schematically indicated by arrow 18 to oxidize the organic material in the flow. During the reaction, gypsum is rapidly formed, which is output through the outlet 16 together with the flow.

The flow may be sludge, particularly deinking sludge including a paper filler, or wastewater containing high amounts of calcium and sulfur.

Due to the large distances to the reactor walls in the bulk reactor section 11 the immediate formation of gypsum will not clog the reactor. Preferably, oxidant is added in an amount sufficient for further efficient oxidation in the tubular reactor section 12.

In a second exemplary version of the embodiment illustrated in Fig. 1 the flow 17 is at conditions supercritical to water and is essentially free from salts that are dissolved in liquid water and precipitate at conditions supercritical to water. This flow may contain an oxidant.

A flow that is at conditions subcritical to water and contains a dissolved salt that precipitate at conditions supercritical to water is entered into the bulk reactor section 11 through the inlet 15 as being schematically indicated by arrow 18. This flow may contain oxidizable material.

The supercritical and the subcritical flows are mixed in the bulk reactor section 11, the temperatures and flow rates of the supercritical and the subcritical flows are selected to obtain a mixed flow that is at conditions being supercritical to water, or becomes supercritical due to the heat of oxidation, to thereby precipitate the salt in the bulk reactor section 11, see US 6,171,509, the contents of which being hereby incorporated by reference.

Preferably, the precipitated salt is output through the outlet 16 together with the mixed flow.

Due to the large distances to the reactor walls in the bulk reactor section 11 the precipitation of salts will not clog the reactor.

Thus, in the two examples above the reactor is provided for the formation of clogging material, i.e. gypsum and/or precipitated salt, within the bulk reactor section 11 only. Thus, no gypsum and/or precipitated salt are formed in the tubular reactor section 12.

The tubular reactor section 12 may be used in some cases only for minor oxidation.

With reference next to Fig. 2, a further illustrated embodiment of the invention differs from the previous illustrated embodiment in that the tubular reactor section 12 is connected to the bulk reactor section 11 upstream of the bulk reactor section 11. The tubular reactor section 12 is connected to the inlet 14 of the bulk reactor section 11.

Thus, a flow containing organic material and water is flowed first through the tubular reactor section 12, and then through the bulk reactor section 11, while at least part of the organic material in the flow is oxidized through supercritical water oxidation.

By means of the reactor of the embodiment illustrated in Fig. 2, a very efficient destruction of a large variety of wastewater and sludge can be obtained. Further, the corrosion of the reactor can be avoided, or at least reduced, as compared with prior art reactors.

In a first exemplary version of the illustrated embodiment the flow that is flowed through the reactor is at acidic conditions, and contains a substance corrosive at condition subcritical to water, i.e. sulfuric acid or hydrochloric acid.

A pH neutralizing agent or substance is introduced to the flow in the bulk reactor section 11 through the inlet 15 to neutralize the acid and reduce corrosion when water becomes subcritical, at some point downstream of the injection point, in the bulk reactor section 11. By introducing the pH neutralizing agent in the vertical bulk reactor, clogging due to the introduction of the pH neutralizing agent is minimized. Furthermore, if the pH neutralizing agent is caustic soda, which is known to form a melt that is very corrosive also at supercritical conditions to water, the introduction of it in the vertical bulk reactor will minimize the risk of said melt to adhere to the reactor walls and thus create serious corrosion. Obviously, no corrosive melt is formed in the tubular reactor section 12.

The corrosivity of the melt is disclosed in the article Review of the Corrosion of Nickel-Based Alloys and Stainless Steels in Strongly Oxidizing Pressurized High Temperature Solutions at Subcritical and Supercritical Temperatures, P. Kritzer et al., Corrosion- Vol. 56, No.11, 2000, the contents of which being hereby incorporated by reference.

A second exemplary version of the embodiment illustrated in Fig. 2 corresponds to the second exemplary version of the embodiment illustrated in Fig. 1, i.e. a flow being at conditions subcritical to water and containing a dissolved salt that precipitate at conditions supercritical to water is entered into the bulk reactor section 11 through the inlet 15, and is mixed with the flow from the tubular reactor section 12 in the bulk reactor section 11 to obtain a mixed flow being at conditions supercritical to water to thereby precipitate the salt in the bulk reactor section 11.

In the embodiment of Fig. 2, the tubular reactor section 12 is preferably provided for oxidizing a non insignificant amount of the organic material comprised in the flow. Preferably, the tubular reactor section 12 is provided for oxidizing at least 25 %, more preferably, at least 35 or 45 %, of the organic material comprised in the flow.

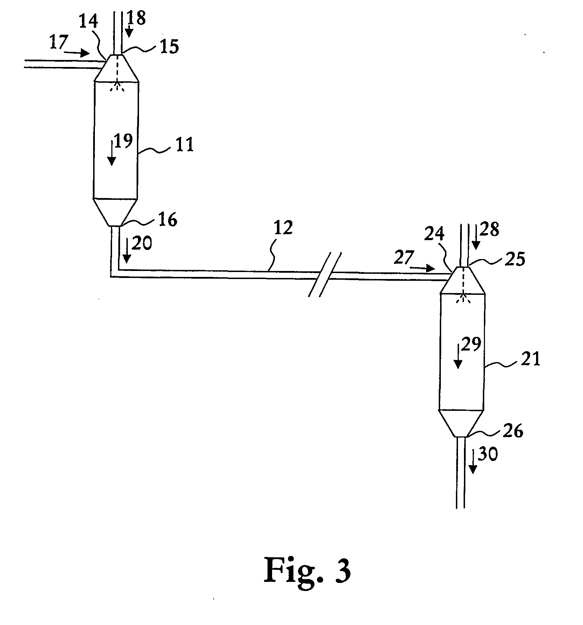

With reference finally to Fig. 3, yet a further illustrated embodiment of the invention differs from the embodiment of Fig. 1 in that a further essentially bulk reactor section 21 is provided downstream of the tubular reactor section 12. The further bulk reactor section 21, which has a cross-sectional area which is substantially larger than the cross-sectional area of the tubular reactor section 12, comprises a first 24 and a second 25 inlet in an upper portion of the bulk reactor section 21, and an outlet 26 in a lower portion of the bulk reactor section 21.

The first inlet 24 is connected to the tubular reactor section 12 to receive the flow as being schematically indicated by arrow 27; a further flow or substance is entered into the further bulk reactor section 21 through the second inlet 25 as being schematically indicated by arrow 28; and the material introduced into the bulk reactor section 21 is flowed from top to bottom as being indicated by arrow 29 while the material is chemically reacted. Any organic material contained in the bulk reactor section 21 is oxidized through supercritical water oxidation. Finally, the reacted material is output through the outlet 26 as being schematically indicated by arrow 29.

In an exemplary version of the embodiment illustrated in Fig. 3, the bulk reactor section 11 upstream of the tubular reactor section 12 may be configured in accordance with any of the exemplary versions of the embodiment illustrated in Fig. 1, whereas the further bulk reactor section 21 downstream of the tubular reactor section 12 may be configured in accordance with any of the exemplary versions of the embodiment illustrated in Fig. 2.

It shall be appreciated that any bulk reactor section of the present invention may be configured and used in accordance with more than one of the above described exemplary versions simultaneously.

Thus, a flow that contains calcium and sulfur, is at conditions supercritical to water, and is essentially free from salts that precipitate at conditions supercritical to water may be entered through the inlet 14 of the bulk reactor section 11 of Fig. 1 or 3, whereas oxidant and a flow that is at conditions subcritical to water and contains a dissolved salt that precipitate at conditions supercritical to water may be entered through the inlet 15, wherein gypsum is formed and a mixed flow that is at conditions being supercritical to water is obtained to thereby precipitate salt in the bulk reactor section 11 of Fig. 1 or 3.

Alternatively, or additionally, a flow that is at conditions supercritical to water, is essentially free from salts that is dissolved in liquid water and that precipitate at conditions supercritical to water, is at acid conditions, and contains a corrosive substance may be entered through the inlet 14 of the bulk reactor section 11 of Fig. 2 or through the inlet 24 of the bulk reactor section 21 of Fig. 3, whereas a flow that is at conditions subcritical to water and contains a dissolved salt that precipitate at conditions supercritical to water, and a pH neutralizing substance may be entered through the inlet 15 to obtain a mixed flow that is at conditions being supercritical to water to thereby precipitate salt and to avoid clogging and optionally to form an oxidizing melt in the bulk reactor section concerned.

It shall further be appreciated that a reactor of the present invention may comprise two or more tubular reactor sections, and one or more essentially bulk reactor sections, wherein each of the tubular reactor sections has a cross-sectional area which is substantially smaller than the cross-sectional area of each of the bulk reactor sections.

It shall still further be appreciated that the present invention may be implemented as a multistage reaction system as being disclosed in e.g. US 5,770,174, the contents of which being hereby incorporated by reference. Here, each of the reactor sections is provided for oxidizing part of the organic material comprised in the flow. Each reactor stage is designed to oxidize as much as possible of the organic material without exceeding a pre-determined maximum temperature which, for instance, may be dictated by material of construction limitations.

Investigations were conducted to verify the result of the present invention.

Waste paper sludge was fed through a supercritical water oxidation plant having a conventional tubular reactor in a number of tests. Each of the tests had to be interrupted after less than 17 hours of operation due to clogging of the reactor. A plug of calcium sulphate, gypsum, and of a few tens centimeters in length was formed immediately downstream of the oxygen inlet. Despite the low amount of gypsum relative the amount of other inorganic material in the process stream, the gypsum creates severe problems since it precipitates so rapidly directly when the oxygen has been introduced, and since it has a strong adhesive capacity.

Subsequently, waste paper sludge was fed through a supercritical water oxidation plant having a reactor as the one illustrated in Fig. 1, i.e. a first relatively wide vertical reactor section and a second narrower tubular reactor section, in a number of tests. Each of the tests showed that the major part of the gypsum sediments downwards in the vertical reactor section together with other solid material. Continuous operation for periods longer than 100 hours without any tendency of clogging of the reactor was observed.

## Claims

1. A method for supercritical water oxidation of a flow of organic material and water, the flow being flowed (19) through an essentially vertical bulk reactor section (11) and an essentially non-vertical tubular reactor section (12) connected together, wherein said bulk reactor section has a cross-sectional area which is substantially larger than the cross-sectional area of said tubular reactor section, **characterized by** the steps of:
- feeding (17) said flow comprising organic material and water into an inlet in an upper portion of said bulk reactor section;
- oxidizing organic material of said flow through supercritical water oxidation while said flow is being flowed (19) through said bulk reactor section;
- outputting (20) said flow through an outlet (16) in a lower portion of said bulk reactor section; and into said tubular reactor section;
- oxidizing efficiently organic material of said flow through supercritical water oxidation while said flow is being flowed through said tubular reactor section, wherein
- each of the bulk and tubular reactor sections oxidizes at least 5% of the organic material comprised in said flow through supercritical water oxidation, the tubular reactor section oxidizing at least part of the organic material which was not oxidized by the bulk reactor section;
- wherein solid and/or corrosive material is formed in said bulk reactor section to thereby reduce the risk of clogging and/or corroding said reactor and wherein:
- said flow comprises calcium and sulfur;
- an oxidant is fed (18) to said bulk reactor section;
- gypsum is formed from said flow in said bulk reactor section; and
- said flow is fed to said tubular reactor section (12) after having been flowed through said bulk reactor section.

2. The method as claimed in claim 1, wherein
- said flow is at conditions supercritical to water and is essentially free from salts that are dissolved in liquid water and precipitate at conditions supercritical to water;
- a flow that is at conditions subcritical to water and comprises a dissolved salt is fed (18) to said bulk reactor section; and
- said supercritical flow and said subcritical flow are mixed in said bulk reactor section, the temperatures and flow rates of said supercritical flow and said subcritical flow being selected to obtain a mixed flow that is at conditions being supercritical to water to thereby precipitate said salt in said essentially vertical reactor section.

3. The method as claimed in either of claims 1 or 2, wherein
- said flow is at an acid condition, and comprises a corrosive substance, particularly a halogen; and
- a pH neutralizing substance is fed (18) to said bulk reactor section to neutralize the acid and reduce corrosion when water becomes subcritical.

4. The method as claimed in claim 3, wherein said pH neutralizing substance is caustic soda, which forms a melt that is very corrosive at supercritical conditions to water, the feeding of said pH neutralizing substance into said bulk reactor section minimizing the risk that said melt adheres to walls of the reactor and creates corrosion.

5. The method as claimed in claims 1 to 4, wherein said flow comprises sludge, particularly deinking sludge including paper filler.

6. The method as claimed in claims 1 to 4, wherein said flow comprises sewage sludge or sludge from the manufacturing of drinking-water.

7. The method as claimed in claims 1 to 6, wherein said bulk reactor section outlet (16) outputs (20) precipitated salt together with said flow.

8. The method as claimed in any of claims 1-7, wherein
- said flow is at acid conditions, and comprises a corrosive substance; and
- said bulk reactor section receives, at an inlet (15) in an upper portion of said bulk reactor section, a pH neutralizing substance.

9. The method as claimed in claim 8, wherein said pH neutralizing substance has a melting point below a lowest possible temperature to obtain conditions supercritical to water; and is capable of forming an oxidizing melt at conditions supercritical to water.

10. The method as claimed in claims 8 or 9, wherein said corrosive substance is a halogen, particularly chlorine, and said pH neutralizing substance is a salt hydroxide, particularly, sodium hydroxide.

11. The method as claimed in any of claims 1-17, wherein the cross-sectional area of said bulk reactor section is about five to ten times larger than the cross-sectional area of said plug flow reactor section.

## Patentansprüche

1. Verfahren zur überkritischen Wasseroxidation eines Stroms aus organischem Stoff und Wasser, wobei der Strom durch einen im Wesentlichen vertikalen Schüttreaktorabschnitt (11) und einen im Wesentlichen nichtvertikalen Röhrenreaktorabschnitt (12) strömt (19), die miteinander verbunden sind, worin der genannte Schüttreaktorabschnitt eine Querschnittsfläche hat, die erheblich größer ist als die Querschnittsfläche des genannten Röhrenreaktorabschnitts, das durch die folgenden Schritte gekennzeichnet ist:
- Zuführen (17) des genannten Stroms, der organischen Stoff und Wasser umfasst, in einen Einlass in einem oberen Teil des genannten Schüttreaktorabschnitts;
- Oxidieren des organischen Stoffs des genannten Stroms durch überkritische Wasseroxidation, während der genannte Strom durch den genannten Schüttreaktorabschnitt strömt (19);
- Abgeben (20) des genannten Stroms durch einen Auslass (16) in einem unteren Teil des genannten Schüttreaktorabschnitts und in den genannten Röhrenreaktorabschnitt;
- effizientes Oxidieren von organischem Stoff des genannten Stroms durch überkritische Wasseroxidation, während der genannte Strom durch den genannten Röhrenreaktorabschnitt strömt, worin
- jeder der Schütt- und Röhrenreaktorabschnitte mindestens 5 % des organischen Stoffs, der in dem genannten Strom enthalten ist, durch überkritische Wasseroxidation oxidiert, wobei der Röhrenreaktorabschnitt zumindest einen Teil des organischen Stoffs oxidiert, der nicht durch den Schüttreaktorabschnitt oxidiert wurde;
- worin fester und/oder korrosiver Stoff im genannten Schüttreaktorabschnitt gebildet wird, um dadurch die Gefahr des Verstopfens und/oder Korrodierens des genannten Reaktors zu verringern, und worin:
- der genannte Strom Calcium und Schwefel umfasst;
- ein Oxidationsmittel dem genannten Schüttreaktorabschnitt zugeführt wird (18);
- Gips aus dem genannten Strom in dem genannten Schüttreaktorabschnitt gebildet wird; und
- der genannte Strom dem genannten Röhrenreaktorabschnitt (12) zugeführt wird nachdem er durch den genannten Schüttreaktorabschnitt geströmt ist.

2. Verfahren nach Anspruch 1, worin
- der genannte Strom bei für Wasser überkritischen Bedingungen vorliegt und im Wesentlichen frei von Salzen ist, die im flüssigen Wasser gelöst werden und bei für Wasser überkritischen Bedingungen ausfallen;
- ein Strom, der bei für Wasser unterkritischen Bedingungen vorliegt und ein gelöstes Salz umfasst, dem genannten Schüttreaktorabschnitt zugeführt wird (18); und
- der genannte überkritische Strom und der genannte unterkritische Strom in dem genannten Schüttreaktorabschnitt gemischt werden, wobei die Temperaturen und Flussraten des genannten überkritischen Stroms und des genannten unterkritischen Stroms ausgewählt werden, um einen gemischten Strom zu erhalten, der bei für Wasser überkritischen Bedingungen vorliegt, um dadurch das genannte Salz in dem genannten, im Wesentlichen vertikalen Reaktorabschnitt auszufällen.

3. Verfahren nach einem der Ansprüche 1 oder 2, worin
- der genannte Strom unter einer sauren Bedingung vorliegt und eine korrosive Substanz umfasst, insbesondere ein Halogen; und
- eine pH-neutralisierende Substanz dem genannten Schüttreaktorabschnitt zugeführt wird (18), um die Säure zu neutralisieren und die Korrosion zu verringern, wenn Wasser unterkritisch wird.

4. Verfahren nach Anspruch 3, worin die genannte pH-neutralisierende Substanz Ätzsoda ist, das eine Schmelze bildet, die bei überkritischen Bedingungen für Wasser sehr korrosiv ist, wobei das Zuführen der genannten pH-neutralisierenden Substanz in den genannten Schüttreaktorabschnitt die Gefahr minimiert, dass die genannte Schmelze an den Wänden des Reaktors haftet und Korrosion verursacht.

5. Verfahren nach den Ansprüchen 1 bis 4, worin der genannte Strom Schlamm, insbesondere Deinking-Schlamm, einschließlich Papierfüllstoff, umfasst.

6. Verfahren nach den Ansprüchen 1 bis 4, worin der genannte Strom Klärschlamm oder Schlamm aus der Herstellung von Trinkwasser umfasst.

7. Verfahren nach den Ansprüchen 1 bis 6, worin der genannte Auslass (16) des Schüttreaktorabschnitts ausgefälltes Salz zusammen mit dem genannten Strom abgibt (20).

8. Verfahren nach einem der Ansprüche 1-7, worin
- der genannte Strom unter sauren Bedingungen vorliegt und eine korrosive Substanz umfasst; und
- der genannte Schüttreaktorabschnitt an einem Einlass (15) in einem oberen Teil des genannten Schüttreaktorabschnitts eine pH-neutralisierende Substanz aufnimmt.

9. Verfahren nach Anspruch 8, worin die genannte pH-neutralisierende Substanz einen Schmelzpunkt unterhalb einer niedrigstmöglichen Temperatur hat, um für Wasser überkritische Bedingungen zu erhalten, und eine oxidierende Schmelze bei für Wasser überkritischen Bedingungen bilden kann.

10. Verfahren nach den Ansprüchen 8 oder 9, worin die genannte korrosive Substanz ein Halogen ist, insbesondere Chlor, und die genannte pH-neutralisierende Substanz ein Salz Hydroxid ist, insbesondere Natriumhydroxid.

11. Verfahren nach einem der Ansprüche 1-17 *[sic],* worin die Querschnittsfläche des genannten Schüttreaktorabschnitts etwa fünf- bis zehnmal größer ist als die Querschnittsfläche des genannten Abschnitts des Reaktors mit Pfropfenströmung.

## Revendications

1. Procédé d'oxydation à l'eau supercritique d'un flux de matière organique et d'eau, le flux s'écoulant (19) à travers une section de réacteur de vrac essentiellement verticale (11) et une section de réacteur tubulaire essentiellement non verticale (12) connectées ensemble, ladite section de réacteur de vrac ayant une section en coupe transversale sensiblement plus grande que la section en coupe transversale de ladite section de réacteur tubulaire, **caractérisé par** les étapes suivantes :
- alimentation (17) dudit flux de matière organique et d'eau dans une admission dans une partie supérieure de ladite section de réacteur de vrac ;
- oxydation de matière organique dudit flux par oxydation à l'eau supercritique pendant que ledit flux s'écoule (19) à travers ladite section de réacteur de vrac ;
- production en sortie (20) dudit flux par une sortie (16) dans une partie inférieure de ladite section de réacteur de vrac ; et jusque dans ladite section de réacteur tubulaire ;
- oxydation efficace de matière organique dudit flux par oxydation à l'eau supercritique pendant que ledit flux s'écoule à travers ladite section de réacteur tubulaire, dans lequel
- chacune des sections de réacteur de vrac et tubulaire oxyde au moins 5% de la matière organique comprise dans ledit flux par oxydation à l'eau supercritique, la section de réacteur tubulaire oxydant au moins une partie de la matière organique qui n'a pas été oxydée par la section de réacteur de vrac ;
- dans lequel de la matière solide et/ou corrosive est formée dans ladite section de réacteur de vrac afin d'ainsi réduire le risque de colmatage et/ou de corrosion dudit réacteur et dans lequel :
- ledit flux comprend du calcium et du soufre ;
- un oxydant est passé (18) dans ladite section de réacteur de vrac ;
- du gypse est formé à partir dudit flux dans ladite section de réacteur de vrac ; et
- ledit flux est alimenté dans ladite section de réacteur tubulaire (12) après s'être écoulé à travers ladite section de réacteur de vrac.

2. Procédé selon la revendication 1, dans lequel
- ledit flux est à des conditions supercritiques par rapport à l'eau et essentiellement dépourvu de sels qui sont dissous dans l'eau liquide et se précipitent à des conditions supercritiques par rapport à l'eau ;
- un flux qui est à des conditions subcritiques par rapport à l'eau et comprend un sel dissous est alimenté (18) dans ladite section de réacteur de vrac ; et
- ledit flux supercritique et ledit flux subcritique sont mélangés dans ladite section de réacteur de vrac, les températures et débits d'écoulement dudit flux supercritique et dudit flux subcritique étant sélectionnés pour obtenir un flux mixte qui est à des conditions supercritiques par rapport à l'eau pour ainsi précipiter ledit sel dans ladite section de réacteur essentiellement verticale.

3. Procédé selon l'une quelconque des revendications 1 ou 2, dans lequel
- ledit flux est dans une condition acide, et comprend une substance corrosive, particulièrement un halogène ; et
- une substance de neutralisation de pH est alimentée (18) dans ladite section de réacteur de vrac pour neutraliser l'acide et réduire la corrosion quand l'eau devient subcritique.

4. Procédé selon la revendication 3, dans lequel ladite substance de neutralisation de pH est de la soude caustique, laquelle forme un bain très corrosif à des conditions supercritiques par rapport à l'eau, l'alimentation de ladite substance de neutralisation de pH dans ladite section de réaction de vrac minimisant le risque que ledit bain adhère aux parois du réacteur et crée une corrosion.

5. Procédé selon les revendications 1 à 4, dans lequel ledit flux comprend une boue, particulièrement une boue de désencrage comprenant une charge de papier.

6. Procédé selon les revendications 1 à 4, dans lequel ledit flux comprend une boue d'égout ou une boue résultant de la fabrication d'eau potable.

7. Procédé selon les revendications 1 à 6, dans lequel ladite sortie de section de réacteur de vrac (16) produit en sortie (20) un sel précipité ainsi que ledit flux.

8. Procédé selon l'une quelconque des revendications 1 à 7, dans lequel
- ledit flux est dans des conditions acides, et comprend une substance corrosive ; et
- ladite section de réacteur de vrac reçoit, au niveau d'une admission (15) dans une partie supérieure de ladite section de réacteur de vrac, une substance de neutralisation de pH.

9. Procédé selon la revendication 8, dans lequel ladite substance de neutralisation de pH a un point de fusion en dessous de la plus basse température possible pour obtenir des conditions supercritiques par rapport à l'eau, et est capable de former un bain oxydant à des conditions supercritiques par rapport à l'eau.

10. Procédé selon les revendications 8 ou 9, dans lequel ladite substance corrosive est un halogène, particulièrement du chlore, et ladite substance de neutralisation de pH est un hydroxyde de sel, particulièrement un hydroxyde de sodium.

11. Procédé selon l'une quelconque des revendications 1 à 17 [*sic*], dans lequel la section en coupe transversale de ladite section de réacteur de vrac est environ cinq à dix fois plus grande que la section en coupe transversale de ladite section de réacteur à écoulement piston.
